# EUROPEAN PATENT SPECIFICATION

(11) **EP 2 461 297 B1**
(45) Date of publication and mention of the grant of the patent: **07.10.2020**
(21) Application number: 12157590.6
(22) Date of filing: 12.11.2008
(51) Int. Cl.: G07F 7/10

(54) **Personal identification number distribution device and method**
Vorrichtung und Verfahren zur Verteilung von Personenidentifizierungsnummern
Dispositif et procédé de distribution de numéros d'identification personnels

(43) Date of publication of application: 06.06.2012
(62) Divisional of application: 08291060.5
(73) Proprietor: Idemia Denmark A/S, 2610 Rodovre (DK)
(72) Inventor: Aage, Peter K., 2830 Virum (DK); Timm, Carsten, 1802 Frederiksberg C (DK)
(74) Representative: Santarelli

(56) References cited:
- EP-A1- 1 195 973
- EP-A2- 0 772 164
- WO-A1-01/35685
- WO-A1-2006/056826
- US-A- 6 112 078
- US-A1- 2006 168 657

## Description

The present invention relates to a personal identification number (PIN) distribution device and method.

When a customer holds an account, for example a bank account, this account is associated with one or more transaction instruments, debit or credit cards for example. To use a card to make a payment, the customer has to know the PIN associated with the card. The standard procedure for delivering a new card to a customer is to send the card through the post or to the bank where the customer's account is held, followed after a few days by a letter containing the PIN associated with the card.

This method of distributing PIN numbers has several drawbacks. First, both the card and the PIN numbers are delivered by standard mail with a few days difference. This gives the following possibilities for a "Man In The Middle" ("MITM") attack:
- MITM can pick up card and PIN number, activate the card and use it or
- MITM can copy the card and copy the PIN number.

Moreover, it is not possible to identify who is actually opening the letter at the recipient's address. Furthermore, the distribution of the PIN number is slow, expensive, and limited to the home address of the cardholder. As long as the letter containing the PIN number is not properly destroyed, there is a risk that a malicious third party finds it. Because PIN numbers are not easy to keep in mind, people may forget it and then stop using their cards. But, if people keep a copy of the PIN number near the card, for example in a wallet of a hand bag, the risks of forgery or use by a malicious third party is increased. For the card issuer, the current mail delivery method used to distribute the PIN number does not provide any tracking possibility. If the cardholder pretends the PIN mailer has not been delivered, the issuer has no information about where the PIN mailer is (for example, stolen, lost or never sent). Because the PIN number and cards are sent via the same channel, i.e., the regular mail, a third party, inside or outside the household, may easily access both the card and the PIN number.

It is known from WO 2006 56 826, to provide the customer with their PIN numbers via the internet or via another communication channels such as a short message sent to the customer's mobile phone.

However, pushing the PIN number to the cardholder has numerous drawbacks. First, the customer may leave the message containing the PIN number available on its computer or his mobile phone because he did not request its transmission. Second, because the PIN number is delivered without being requested by the customer, it might be delivered to a lost, stolen or rarely used telephone or it might be destroyed as a "spam" (unsolicited message). Moreover, this method does not imply an acknowledgement of receipt sent by the customer. Furthermore, a customer who has ordered more than one card receives more than one PIN and can be confused in associating PIN numbers and cards.

The present invention aims to remedy these drawbacks.

To that end, according to a first aspect, the present invention relates to a method according to claim 1.

Thanks to these features, the issuer and the user benefit of some significant advantages in comparison to the existing mailed delivered PIN.

For instance, sending a personal code through an electronic channel (for example a mobile telephone network) creates great savings for the issuer since a number of costs disappear such as mailer letter, printing, stock administration, labor, printers, maintenance, stamps.

Moreover, because almost every user of financial instruments has a mobile phone, the user has the opportunity to retrieve his/her personal code anywhere and at any time.

The method according to the present invention also provides the issuer with tracking features because the user has to request the personal identification number. The issuer has the opportunity to know if the personal code has been requested and received by the cardholder.

Moreover, because the personal code and the associated financial instrument are not sent through the same channel, the security is enhanced. Indeed, it is much more difficult for a third party to access both the financial instrument and the personal code. Furthermore, the method of the present invention may authenticate who receives the personal code because the user may be identified when requesting the personal code.

In particular embodiments, during the step of sending the request code, a financial instrument is sent to a user via the first channel together with the request code associated with said financial instrument. Thanks to these features, the user may obtain the personal code as soon as he/she receives the financial instrument. Thus, the user does not need to wait a few days before being allowed to use this financial instrument. In case the request code is provided together with the card, the personal code, i.e., the PIN, is potentially available to the cardholder as soon as the card is received and can be retrieved at any time.

According to particular features, the method according to the present invention, as succinctly set forth above further includes a step of decrypting the personal code using the request code as a decryption key. Thanks to these features, each recorded personal code is protected by a specific key that only the user knows.

According to particular features, the first channel is a mail delivery channel and both the second and third channels are a mobile telephone network. Thanks to these features, the delivery of the personal code is fast, easy and may be initiated from everywhere, provided that a mobile telephone network signal can be accessed.

Both the second and third channels are a network for transmitting short messages. Thanks to these features, the delivery of the personal code is fast easy and may be initiated from everywhere, provided that a mobile telephone network signal can be accessed. Moreover, the short message containing the personal code may be stored in a telephone memory.

According to a second aspect, the present invention relates to a device according to claim 6.

According to a third aspect, the present invention relates to a system according to claim 7.

As the advantages, objectives and particular features of this device, and of this telecommunications system are similar to those of the method of distributing PIN, as briefly set forth above, they are not repeated here.

Other advantages, aims and features of the present invention will emerge from the following description, given, with an explanatory purpose that is in no way limiting, with respect to the accompanying drawings, in which:
- figure 1 represents, in the form of a block diagram, a particular embodiment of the device according to the present invention,
- figure 2 shows the fields of a PIN request message and of a record in a database and
- figure 3 represents steps performed for implementing a particular embodiment of the method according to the present invention.

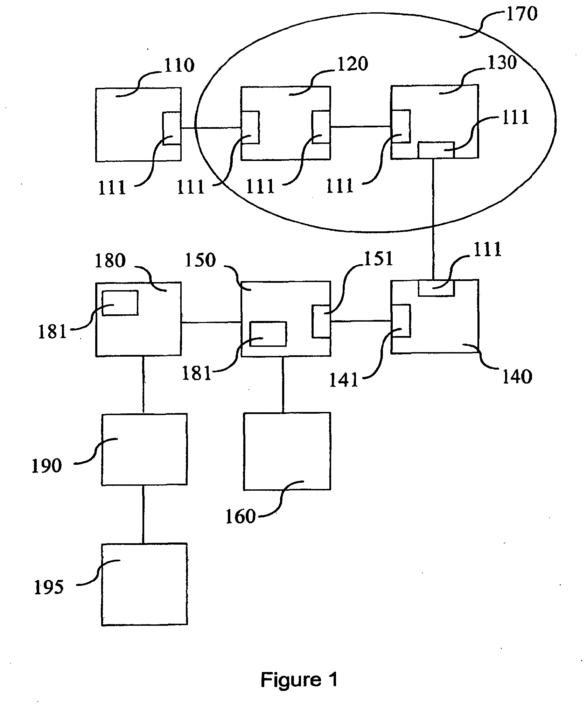

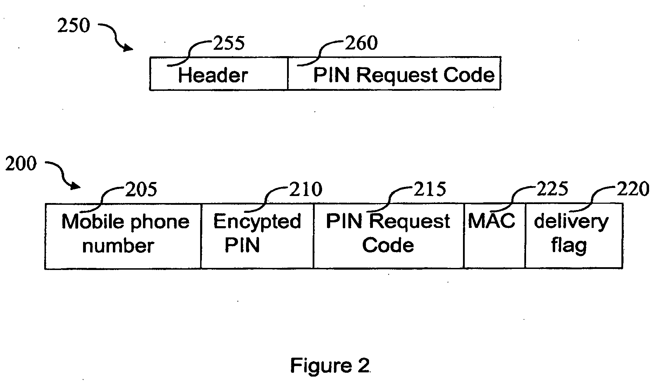

As shown on figure 1, a PIN distribution server 180 contains a table of records 181. As shown on the lower line of figure 2, each record 200 in this table relates to one and only one card and contains at least the following information: a customer mobile phone number 205, the PIN 210 for that card, a PIN request code 215, a MAC 225 and a delivery flag 220. The PIN request code 215 field is the "key field" of the table. The PIN request code 215 has a value that never appears more than once within the table. Thus a given PIN request code 215 identifies one and only one record. The mobile phone subscriber number 205 is the phone number from which the PIN distribution server 180 expects to receive the associated PIN request code 215 and to which it will send the PIN 210. The card issuer 195 will have obtained this mobile phone number 205 from all those customers who elect to have their PINs distributed by SMS (acronym for "short message system").

The delivery flag 220 is initially set at the value "undelivered" and is set to the value "delivered" when the delivery of the PIN to the customer is confirmed.

The PIN request code 215 is provided by a data provider 190. In variants, the PIN request code is generated by the PIN Distribution Server 180 or supplied by the issuer 195.

The PIN 210 is encrypted by the data provider 190 according to the following encryption function:
encrypted PIN = encrypt(encrypt(PIN, zonekey), PIN-request-code)
where "encrypt(x,y)" is an encryption function, for example a DES (acronym for "Data Encryption Standard") encryption function, with two arguments. The first argument is the data to be encrypted, i.e., the PIN, and the second argument is the key to use for the encryption. As can be seen, this is a double encryption in which the PIN request code is the key for the second encryption occurrence. The decryption function allows an SMS content server 150 or a hardware security module 160 to recover the plain text according to the following decryption function:
decrypted PIN = decrypt(decrypt(encrypted PIN, PIN-request-code) zonekey)
where "decrypt(x,y)" is the decryption function reciprocal of encrypt(x,y).

As can be understood, the device and method according to the present invention both add an extra measure of security as compared to simple encryption. In order to decrypt the PIN, a fraudster needs two elements, the PIN request code and the zone key, instead of just the zone key.

The PIN delivery record is further protected by encrypting at least the PIN field and computing a Message Authentication Code ("MAC") 225 over the whole record. The MAC 225 is held in the table with the corresponding record 200 and is a well known means of ensuring the integrity of the data in the related record.

A new or replacement card to be sent to a customer is attached to what is known as a "carrier", i.e., a piece of card or paper designed to be handled automatically and onto which is printed the destination address of the card plus any other information the card issuer may desire to communicate to the customer. In particular, according to particular embodiments of the present invention, the PIN request code is printed onto this carrier. The carrier, with the card attached, is placed in an envelope and sent through the post to the customer.

In order to obtain the PIN that is necessary for using the financial instrument, i.e., the card, the customer composes an SMS message 250 (see the upper line of figure 2) containing a header 255 and, in the SMS body, the PIN request code 260 that the customer received with the card.

The customer sends this SMS message 250 to a telephone number that is either indicated on the carrier or provided in some other way, for example via the internet. The SMS message 250 is routed from his/her mobile phone, also called "Mobile Station" ("MS") 110, to a SMS service centre ("SMSC") 140, via a base station 120 and a switching centre 130 of a mobile telephone network 170. The integrity and security of the message across the mobile telephone network 170 is provided by the mobile operator's security system 111. The SMSC 140 decrypts the message using the mobile operator's security system 111, and re-encrypts it using a security means 141 agreed beforehand with the operator of the SMS content server 150. The SMSC 140 then forwards the newly encrypted PIN request code 215, along with mobile phone number 205 from which the SMS came, to the SMS content server 150.

The SMS content server 150 decrypts the PIN request code 215 using the agreed security means 151. The SMS content server 150 holds a copy of table 181. The SMS content server 150 searches the table 181 for a record that matches the PIN request code 215.

When a matching record is found, the SMS content server 150 checks the requestor's phone number against the phone number in the matching record. In the event of no match being found for the PIN request code or in the event the requestor's number not corresponding to the phone number in the matched record, in particular embodiments, an error message is composed and returned to the requestor.

The SMS content server 150 uses a hardware security module 160 to verify the Message Authentication Code 225. If the verification of the Message Authentication Code succeeds, the SMS content server 150 successively uses the PIN request code and the hardware security module 160 to decrypt the PIN in the matching record. The SMS content server 150 then generates an SMS message of which content is the PIN, and of which destination address is the mobile number 205 found in the record. The SMS content server 150 encrypts the SMS message using security means 151 and sends it back to the SMSC 140. The SMSC 140 decrypts the PIN using the agreed security means 141 and sends the SMS message with the PIN to the customer's Mobile Station 110. The message integrity and security is provided by the mobile operator's security system 111.

The SMS delivery reporting system allows the SMSC 140 to keep track of precisely which PINs have been requested and which have been delivered.

Once the customer has memorized the PIN in his/her own memory, he/she is supposed to delete the PIN message from the memory of his/her mobile phone. In this way, the length of time that the PIN remains accessible in the mobile phone memory is kept to a minimum.

For the card issuer, receiving the PIN request code means that the customer acknowledges receipt of the card.

A customer who has ordered more than one card may be expecting more than one PIN 210, the PIN request code 215 unambiguously identifies which code corresponds to which card.

With an unpredictable PIN request code 215, a malicious third party needs to find the correct phone and the PIN request code 215. When a security conscious user receives the card and the PIN request code 215, he/she memorizes the PIN request code 215 and then destroys its printed trace. This increases security by reducing the length of time that the printed trace of the PIN request code 215 remains accessible to a third party.

As stated above, the method of the present invention allows a financial instrument issuer to distribute the associated PIN 210 to customers' mobile phone through the mobile telephone network 170 using short message system ("SMS").

Sending a PIN 210 through the SMS channel generates great savings for the issuer since a number of costs no longer exist such as: PIN mailer letter, printing, stock administration, labour, printers, maintenance, stamps.

The use of the present invention also provides better service and convenience to the user. Because everybody has a mobile phone and uses it extensively as a new interface to chat, do banking operations, purchase services and content, having the PIN 210 being sent directly to the mobile phone which is always carried by the cardholder is a clear benefit for the user. The cardholder has the opportunity to retrieve his/her PIN anywhere, given the telephone network can be accessed. Moreover, the PIN 210 is available to the cardholder as soon as he/she receives the card. In particular embodiments, the PIN is kept in the table 181 and the user may retrieve the PIN many times. In other embodiments, the PIN data is deleted or the access to the PIN is forbidden once the user has received it for the first time.

As compared to the prior art systems, it is an added security feature to send the new PIN 210 via a separate channel. Indeed, it is more difficult for a malicious third party to access both the card and the PIN 210, since they don't follow the same channels. Moreover, the recipient of the PIN 210 is identified and/or authenticated by his/her mobile telephone number 205.

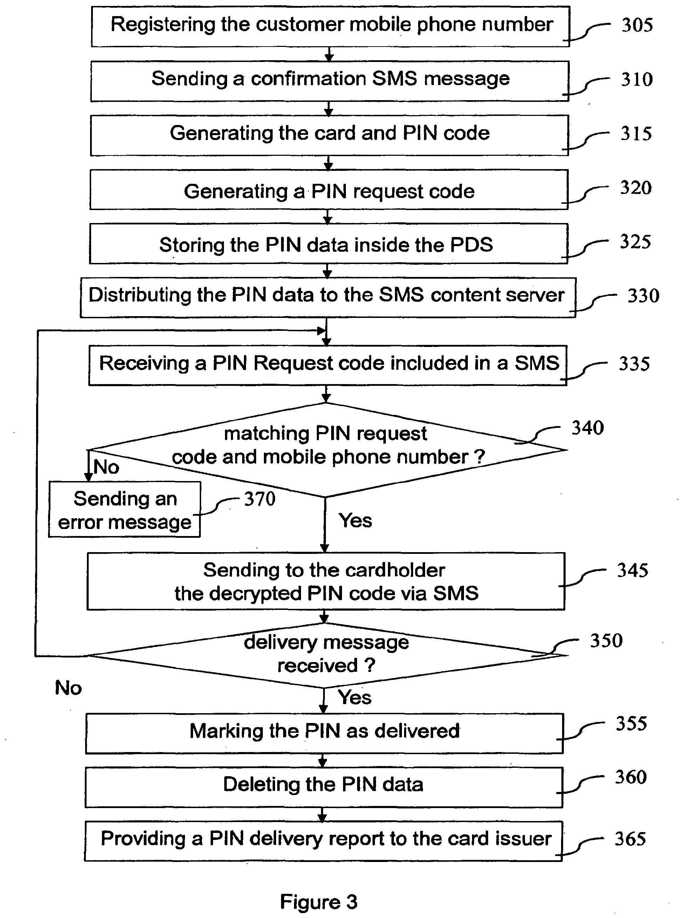

As can be seen in figure 3, in a particular embodiment, the method of the present invention begins by a step 305 of registering the customer's mobile phone number when the customer orders a new card.

Optionally, the card issuer sends a short message requiring a response to the registered mobile phone number to check that it is correct, during step 310.

During step 315, the card and the associated PIN are generated using conventional methods.

During step 320, a unique SMS keyword, called "PIN request code", is generated per PIN/card instance. This is the keyword that shall be sent by the cardholder willing to receive the PIN. The keyword is unique because a cardholder may order several cards at the same time. The keyword is also sent with the card, printed on the carrier (delivery letter accompanying the card).

During step 325, the PIN data (Mobile number, encrypted PIN, delivery reference, delivery flag) is stored on a PIN distribution server 180 that keeps track of the delivery. Data is associated with a MAC to ensure integrity.

During step 330, the PIN data (Mobile number, encrypted PIN, PIN request code) is distributed to a SMS content server. The data is associated with a MAC to avoid changes in data (primarily mobile number).

During step 335, the cardholder requests the PIN by sending an SMS including the PIN request code to a telephone number specified by the issuer.

During step 340, the PIN request code of the received SMS and the phone number associated to the received SMS are searched in the table of records to determine if there is a PIN associated to them in a record of the table stored in the content server. If no, during step 370, an error message is sent back to the mobile phone number and, optionally, a report notifying the missed attempt is sent to the issuer. If there is a PIN associated to the PIN request code and phone number, during step 345, the PIN is decrypted and sent to the Mobile number.

During step 350, it is determined if a delivery report is received from the mobile phone network operator. If no, the process returns to step 335.

If a delivery report is received, during step 355, the PIN is marked as "delivered" in the record stored in the content server. Optionally, during step 360, the PIN data is deleted from the content server after the delivery is confirmed. In other words, optionally, the PIN cannot be delivered twice by the content server.

During step 365, the content server provides a delivery report including a delivery reference, hour and date of delivery to the PIN Distribution server 180 which reports back to the issuer 195 that the PIN is delivered to the customer. This delivery report is provided by the telephone network operator without cardholder action.

There are basically two ways to capture the mobile phone number from which the first SMS is sent:
- the direct method using a validation SMS: the customer gives the mobile phone number during the registration or ordering process with physical presence or using an online system. When the number is provided/entered by the customer, a test message is sent to the mobile phone number. The customer must then provide the content of this test message (a word or a number) in order to confirm the validity of the number. This process is known from mobile phone networks operators.
- the match-by-reference method: by creating a match reference, typically a number, that is given to the customer who is supposed to send the number in an SMS to a telephone number specified by the issuer. The same number must be included in the PIN distribution order from the issuer. When the SMS and the order are received by the PIN server, the reference number is matched and the GSM number of the received SMS is registered in the distribution order.

Any number of distribution profiles (known as "electronic carriers") can be defined in the PIN Distribution Server. Each carrier can contain different settings and texts to be sent to the receiver.

When sending a distribution order (of one PIN), the carrier number must be provided.

In variants, a delay of delivery is introduced to ensure that the card is delivered before a PIN can be delivered.

The period where the PIN is available for request and delivery may also be limited.

For each carrier it is possible to define a Data Ready Notification Text. This message is intended to inform the customer that the PIN can now be retrieved from the PIN Server.

By using a specific SMS feature, it is possible to overwrite the SMS containing the PIN earlier delivered to the cardholder. Note that the overwrite SMS feature is provided by the SMS standard. For example, that feature is used when a telephone network operator sends an SMS to notify a waiting voice mail message, in order to avoid filling the SMS inbox with voicemail notifications. This overwrite message is sent after a specified period with a specified overwrite text. Thank to this feature, even if the user has kept his/her PIN in the telephone memory, it is possible to delete it by overwriting text. The PIN security is thus enhanced.

To avoid brute force attacks or keyword guessing it is possible to black list GSM numbers for a period if too many wrong requests are received. A message can be sent when the number is banned.

Another system policy is the period of time where delivery information is stored in the system. As noted above, PIN and keyword may always be deleted when delivered.

The system supports a number of PIN settings in order to support different encryption methods and key versions.

Many GSM-SMS (gateway) operators offer to pick up SMS via so called "short numbers". A short number is typically three to five digits. It is convenient for the cardholder to request the PIN via a short number because it is easier to enter the number.

The PIN server always sends via a direct SMSC connection in order to avoid any eyes-dropping prior to the transmission.

All messages have a track of delivery - meaning that it is logged if the message is delivered. The mechanism used for this is SMS delivery reports, which is a feature of the mobile telephone networks. If requested, the phone responds with a delivery report when a SMS is received.

When the system has generated the PIN request code, only a hash (for example, MD5 or SHA) is stored in the systems.

The PIN data is double encrypted using a customer key and the keyword. This ensures that data can only be decrypted and sent when the correct keyword is provided by the cardholder.
All data stored in the PIN Server is secured with a MAC ("Message Authentication Code"). The MAC is checked prior to transmitting the PIN. This ensures that nobody has altered data, and particularly the mobile phone number.

## Claims

1. A method of distributing a personal identification number for a card, namely a PIN, to a user of the card associated with said PIN, **characterized in that** it comprises:
a preliminary step of generating said card and the associated PIN, and generating for this card a record containing the user's mobile phone number, said PIN and a request code, the request code identifying one and only one record, and a step of sending this card to the user, and after the preliminary step:
- a step of sending to the user, via a first channel, the request code (260) associated with said PIN (210),
- a step (335) of receiving said request code (260) via a second channel, which is SMS channel,
- a step of searching for a record (200) matching the received request code (260), and checking the requestor's phone number against the phone number in the matching record.
- a step of retrieving, from the matching record, the PIN (210) associated with said received request code (260) and
- when the requestor's phone number matches the phone number in the matching record a step (345) of sending to the user the retrieved PIN (210) via a third channel which is a SMS channel.

2. A method according to claim 1, wherein, during the step of sending the request code, the card is sent to a user via the first channel together with the request code associated with said card.

3. A method according to either one of claims 1 to 2, including a step of decrypting the PIN using the request code as a decryption key.

4. A method according to either one of claims 1 to 43, wherein both the second and third channels are secured channels.

5. A method according to either one of claims 1 to 4, wherein the first channel is a mail delivery channel and both the second and third channels are a mobile telephone network (170).

6. A device for distributing a personal identification number for a card to a user of the card associated with said personal identification number, namely a PIN, **characterized in that** it comprises:
- a memory for storing a record specific to this card containing the user's mobile phone number, this PIN and a request code, the request code identifying one and only one record,
- means for receiving, via a second channel which is a SMS channel, the request code (260) associated with said PIN (210) and previously sent to the user via a first channel,
- means for searching for a record (200) matching the received request code (260) and for retrieving, from the matching record, the PIN (210) associated with said received request code, and checking the requestor's phone number against the phone number in the matching record, and
- means for sending the retrieved PIN (210) via a third channel which is a SMS channel to said user when the requestor's phone number matches the phone number in the matching record.

7. A telecommunications system comprising a plurality of terminals devices connected via a telecommunications network, **characterized in that** it comprises at least one terminal device comprising a device for distributing personal identification numbers according to claim 6.

## Patentansprüche

1. Verfahren zum Verteilen einer persönlichen Identifikationsnummer für eine Karte, nämlich einer PIN, an einen Benutzer der Karte, der mit der PIN verknüpft ist, **dadurch gekennzeichnet, dass** es Folgendes umfasst:
einen Vorabschritt des Erzeugens der Karte und der verknüpften PIN und Erzeugen eines Datensatzes für diese Karte, der die Mobiltelefonnummer des Benutzers, die PIN und einen Anforderungscode enthält, wobei der Anforderungscode einen und nur einen Datensatz identifiziert, und einen Schritt des Sendens dieser Karte an den Benutzer, und nach dem Vorabschritt:
- einen Schritt des Sendens des Anforderungscodes (260), der mit der PIN (210) verknüpft ist, via einen ersten Kanal an den Benutzer,
- einen Schritt (335) des Empfangens des Anforderungscodes (260) via einen zweiten Kanal, der ein SMS-Kanal ist,
- einen Schritt des Suchens nach einem Datensatz (200), der mit dem empfangenen Anforderungscode (260) übereinstimmt, und des Prüfens der Telefonnummer des Anforderers anhand der Telefonnummer im übereinstimmenden Datensatz,
- einen Schritt des Abrufens der PIN (210), die mit dem empfangenen Anforderungscode (260) verknüpft ist, aus dem übereinstimmenden Datensatz und
- wenn die Telefonnummer des Anforderers mit der Telefonnummer im übereinstimmenden Datensatz übereinstimmt, einen Schritt (345) des Sendens der abgerufenen PIN (210) via einen dritten Kanal, der ein SMS-Kanal ist, an den Benutzer.

2. Verfahren nach Anspruch 1, wobei die Karte während des Schritts des Sendens des Anforderungscodes zusammen mit dem Anforderungscode, der mit der Karte verknüpft ist, via den ersten Kanal an einen Benutzer gesendet wird.

3. Verfahren nach einem der Ansprüche 1 bis 2, das einen Schritt des Entschlüsselns der PIN unter Verwendung des Anforderungscodes als einen Entschlüsselungsschlüssel beinhaltet.

4. Verfahren nach einem der Ansprüche 1 bis 3, wobei sowohl der zweite als auch der dritte Kanal gesicherte Kanäle sind.

5. Verfahren nach einem der Ansprüche 1 bis 4, wobei der erste Kanal ein Postzustellkanal ist und sowohl der zweite als auch der dritte Kanal ein Mobilfunknetzwerk (170) sind.

6. Vorrichtung zum Verteilen einer persönlichen Identifikationsnummer für eine Karte an einen Benutzer der Karte, der mit der gewöhnlichen Identifikationsnummer, nämlich einer PIN, verknüpft ist, **dadurch gekennzeichnet, dass** sie Folgendes umfasst:
- einen Speicher zum Speichern eines Datensatzes, der für diese Karte spezifisch ist und die Mobiltelefonnummer des Benutzers, diese PIN und einen Anforderungscode enthält, wobei der Anforderungscode einen und nur einen Datensatz identifiziert;
- ein Mittel zum Empfangen des Anforderungscodes (260), der mit der PIN (210) verknüpft ist und zuvor via einen ersten Kanal an den Benutzer gesendet wurde, via einen zweiten Kanal, der ein SMS-Kanal ist,
- ein Mittel zum Suchen nach einem Datensatz (200), der mit dem empfangenen Anforderungscode (260) übereinstimmt, und zum Abrufen der PIN (210), die mit dem empfangenen Anforderungscode verknüpft ist, und zum Prüfen der Telefonnummer des Anforderers anhand der Telefonnummer im übereinstimmenden Datensatz und
- ein Mittel zum Senden der abgerufenen PIN (210) via einen dritten Kanal, der ein SMS-Kanal ist, an den Benutzer, wenn die Telefonnummer des Anforderers mit der Telefonnummer im übereinstimmenden Datensatz übereinstimmt.

7. Telekommunikationssystem, das eine Vielzahl von Endgerätevorrichtungen umfasst, die via ein Telekommunikationsnetzwerk verbunden sind, **dadurch gekennzeichnet, dass** es mindestens eine Endgerätevorrichtung umfasst, die eine Vorrichtung zum Verteilen von persönlichen Identifikationsnummern nach Anspruch 6 umfasst.

## Revendications

1. Procédé de distribution d'un numéro d'identification personnel pour une carte, à savoir un PIN, à un utilisateur de la carte associée audit PIN, **caractérisé en ce que** il comprend :
- une étape préliminaire consistant à générer ladite carte et le PIN associé, et générer pour cette carte un enregistrement contenant le numéro de téléphone mobile de l'utilisateur, ledit PIN et un code de demande, le code de demande identifiant un seul et unique enregistrement, et une étape consistant à envoyer cette carte à l'utilisateur, et après l'étape préliminaire :
- une étape consistant à envoyer à l'utilisateur, via un premier canal, le code de demande (260) associé audit PIN (210),
- une étape (335) consistant à recevoir ledit code de demande (260) via un deuxième canal, qui est un canal SMS,
- une étape consistant à rechercher un enregistrement (200) concordant avec le code de demande (260) reçu, et vérifier le numéro de téléphone du demandeur par rapport au numéro de téléphone dans l'enregistrement concordant,
- une étape consistant à obtenir, à partir de l'enregistrement concordant, le PIN (210) associé audit code de demande (260) reçu et
- lorsque le numéro de téléphone du demandeur concorde avec le numéro de téléphone dans l'enregistrement concordant, une étape (345) consistant à envoyer à l'utilisateur le PIN (210) obtenu via un troisième canal qui est un canal SMS.

2. Procédé selon la revendication 1, dans lequel, au cours de l'étape d'envoi du code de demande, la carte est envoyée à un utilisateur via le premier canal avec le code de demande associé à ladite carte.

3. Procédé selon l'une ou l'autre des revendications 1 ou 2, comprenant une étape consistant à déchiffrer le PIN en utilisant le code de demande comme clef de déchiffrement.

4. Procédé selon l'une quelconque des revendications 1 à 3, dans lequel le deuxième et le troisième canal sont tous deux des canaux sécurisés.

5. Procédé selon l'une quelconque des revendications 1 à 4, dans lequel le premier canal est un canal de remise de courrier et le deuxième et le troisième canaux constituent tous deux un réseau téléphonique mobile (170) .

6. Dispositif pour distribuer un numéro d'identification personnel pour une carte à un utilisateur de la carte associée audit numéro d'identification personnel, à savoir un PIN, **caractérisé en ce qu'**il comprend :
- une mémoire pour stocker un enregistrement spécifique à cette carte contenant le numéro de téléphone mobile de l'utilisateur, ce PIN et un code de demande, le code de demande identifiant un seul et unique enregistrement,
- des moyens pour recevoir, via un deuxième canal qui est un canal SMS, le code de demande (260) associé audit PIN (210) et envoyé précédemment à l'utilisateur via un premier canal,
- des moyens pour rechercher un enregistrement (200) concordant avec le code de demande (260) reçu et pour obtenir, à partir de l'enregistrement concordant, le PIN (210) associé audit code de demande reçu, et vérifier le numéro de téléphone du demandeur par rapport au numéro de téléphone dans l'enregistrement concordant, et
- des moyens pour envoyer le PIN (210) obtenu via un troisième canal qui est un canal SMS audit utilisateur lorsque le numéro de téléphone du demandeur concorde avec le numéro de téléphone dans l'enregistrement concordant.

7. Système de télécommunications comprenant une pluralité de dispositifs terminaux connectés via un réseau de télécommunications, **caractérisé en ce qu'**il comprend au moins un dispositif terminal comprenant un dispositif pour distribuer des numéros d'identification personnels selon la revendication 6.
